Europäisches Patentamt

(19) European Patent Office

Office européen des brevets

(11) Publication number: **0 202 628**
**A2**

## (12) EUROPEAN PATENT APPLICATION

(21) Application number: **86106709.8**

(22) Date of filing: **16.05.86**

(51) Int. Cl.⁴: **G 06 F 11/00**

(30) Priority: **20.05.85 JP 106044/85**

(43) Date of publication of application:
**26.11.86 Bulletin 86/48**

(84) Designated Contracting States:
**DE FR GB**

(71) Applicant: **HITACHI, LTD.**
**6, Kanda Surugadai 4-chome Chiyoda-ku**
**Tokyo 100(JP)**

(72) Inventor: **Satoh, Takao**
**1099, Ozenji Asao-ku**
**Kawasaki-shi(JP)**

(72) Inventor: **Kubo, Takashige**
**3-76-2, Katakuramachi**
**Hachioji-shi(JP)**

(72) Inventor: **Yoshizawa, Yasufumi**
**26-4, Sakaecho-1-chome**
**Tachikawa-shi(JP)**

(72) Inventor: **Imura, Junichi**
**9-18, Uragaoka-2-chome**
**Yokosuka-shi(JP)**

(72) Inventor: **Wakai, Katsuro**
**1127-18, Imaizumi**
**Hadano-shi(JP)**

(74) Representative: **Strehl, Schübel-Hopf, Groening, Schulz**
**Widenmayerstrasse 17 Postfach 22 03 45**
**D-8000 München 22(DE)**

(54) Instruction monitor used for a stored-program data processor.

(57) An instruction monitoring apparatus for use with a stored-program data processor includes a memory (2200) for storing instruction executional events, such as execution of an instruction and successful or unsuccessful branching of an instruction, and a controller (2100) for controlling the recording of events into the memory. The memory (2200) is addressed in correspondence to the address of areas to be monitored in the main storage. The controller (2100) responds to the execution of an instruction by the central processor (1000) to record executional events including execution, successful or unsuccessful branching and main storage reference/change into the memory (2200) at a location corresponding to the address of the executed instruction or the address which has been accessed for reference/change.

FIG. 1

## INSTRUCTION MONITOR USED FOR

## A STORED-PROGRAM DATA PROCESSOR

BACKGROUND OF THE INVENTION

FIELD OF THE INVENTION

This invention relates to an apparatus for monitoring and recording the progress of program execution in a stored-program data processor. This kind of apparatus is useful for program testing and debugging.

DESCRIPTION OF THE PRIOR ART

As an index of perfection of program testing, there has been used test coverage factors, which are generally evaluated by the following formulas.

$$C(code) = \frac{\text{Number of instructions executed}}{\text{Total number of instructions}} \times 100 \ (\%)$$

$$C(path) = \frac{\text{Number of decision-to-decision paths executed}}{\text{Total number of decision-to-decision paths}} \times 100 \ (\%)$$

where a decision-to-decision path is defined to be a path from a branch instruction to a next branch instruction including executable elements. Information necessary for the calculation of the above two formulas is as follows.

(1) Information on execution of instructions excluding branch instructions.

(2) Information on successful or unsuccessful branching of branch instructions.

In the conventional system, the information has been sampled on an interrupt basis during the program execution at the expense of increased system overhead and therefore with the result of an excessively prolonged execution time.

There has been proposed a debugging system for fast sampling the information of executed instructions as described in Japanese Patent Unexamined Publication No. 58-181152. This system, however, has aimed solely to log executed instructions and has not provided sufficient information (missing information on successful or unsuccessful branching of branch instructions) necessary for calculating the test coverage factors.

In program debugging, the address of main storage referred or changed by the program is effective information. Such address information has been collected through the analysis of instruction words on an interrupt basis at each instruction execution. However, this prior art system has imposed an excessive system overhead.

SUMMARY OF THE INVENTION

The present invention is intended to overcome the foregoing prior art deficiencies, and its prime object is to provide an instruction monitor which collects sufficient instruction executional information quickly.

In order to achieve the above objective, the inventive instruction monitor (used for a stored-program data processor which sequentially executes instructions stored in its storage) comprises record memory means provided in correspondence to the address space of at least part of the system main storage, and recording control means for recording instruction executional information including execution of instructions and successful or unsuccessful branching of branch instructions into pertinent addresses of the record memory means in response to each instruction execution.

BRIEF DESCRIPTION OF THE DRAWINGS

Fig. 1 is a block diagram showing briefly an embodiment of this invention;

Fig. 2 is a diagram exemplifying the recording format for instruction executional events;

Fig. 3 is a table exemplifying the instruction execution log list;

Fig. 4 is a diagram showing the structure of the recording control word (RCW);

Fig. 5 is a block diagram showing in detail the instruction event recording controller in Fig. 1;

Figs. 6, 7 and 8 are flowcharts showing the operation of the apparatus shown in Figs. 1 through 5.

DESCRIPTION OF THE PREFERRED EMBODIMENT

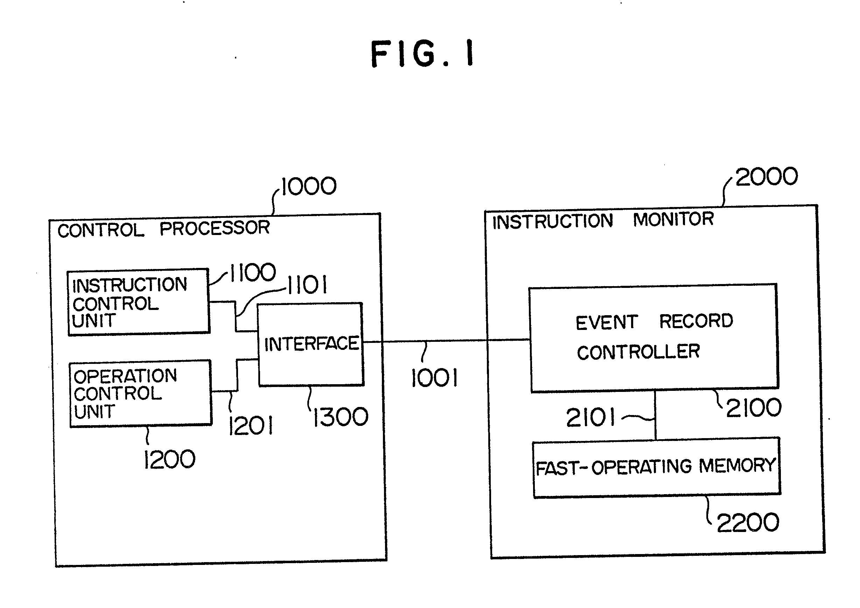

An embodiment of this invention will now be described with reference to the drawings. In Fig. 1, the inventive instruction monitor 2000 comprises an instruction event recording controller 2100 and a fast-operating memory (will be termed simply "memory" hereinafter) 2200, and it is connected with a pipeline-controlled central processor 1000 consisting of an instruction control unit 1100, a calculation control unit 1200 and an interface unit 1300 which connects these units with the instruction monitor 2000. Signal lines 1101 and 1201 are used to collect instruction executional information and control information for the instruction monitor from the instruction control unit 1100 and calculation control unit 1200, a signal line 1001 is used to connect the instruction event recording controller 2100 to the interface unit 1300, and a signal line 2101 is used for transferring instruction executional information between the instruction event recording controller 2100 and memory 2200.

Instruction executional events are defined in this embodiment to be events occurring in the central processor 1000 as follows.

(a) Execution of an instruction other than a branch instruction.

(b) Successful or unsuccessful branching of a branch instruction.

(c) Reference or advancement of a main storage address caused by the execution of an instruction.

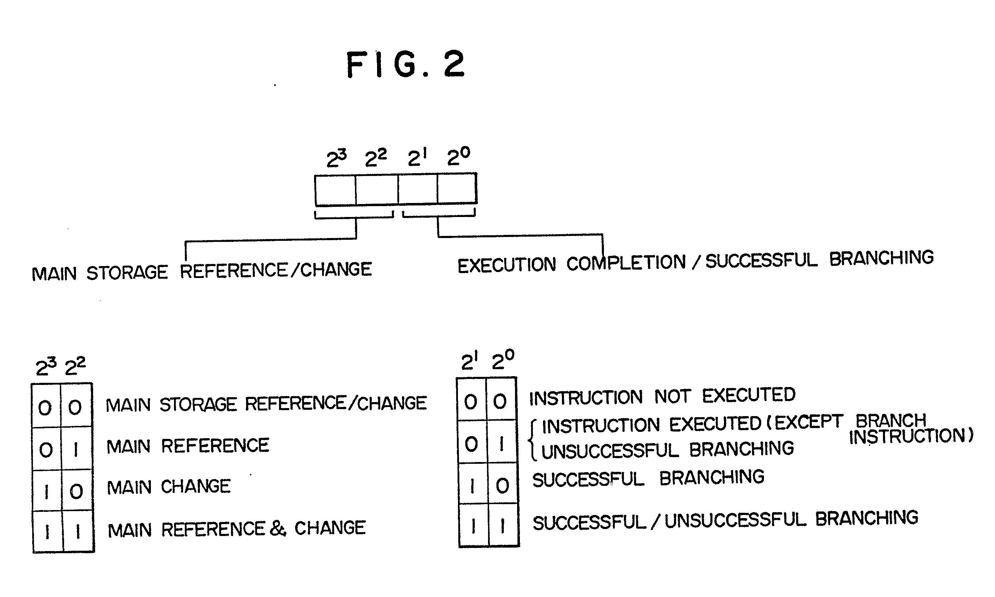

The memory 2200 stores these events in the form of 4-bit information in correspondence to each instruction or operand address. As shown in Fig. 2, the 4-bit information has the following meaning. Bit $2^0$ is assigned

to "instruction execution" information, bit $2^1$ is assigned

to "successful branching" information, bit $2^2$ is assigned

to "main storage reference" information, and bit $2^3$ is

assigned to "main storage change" information.

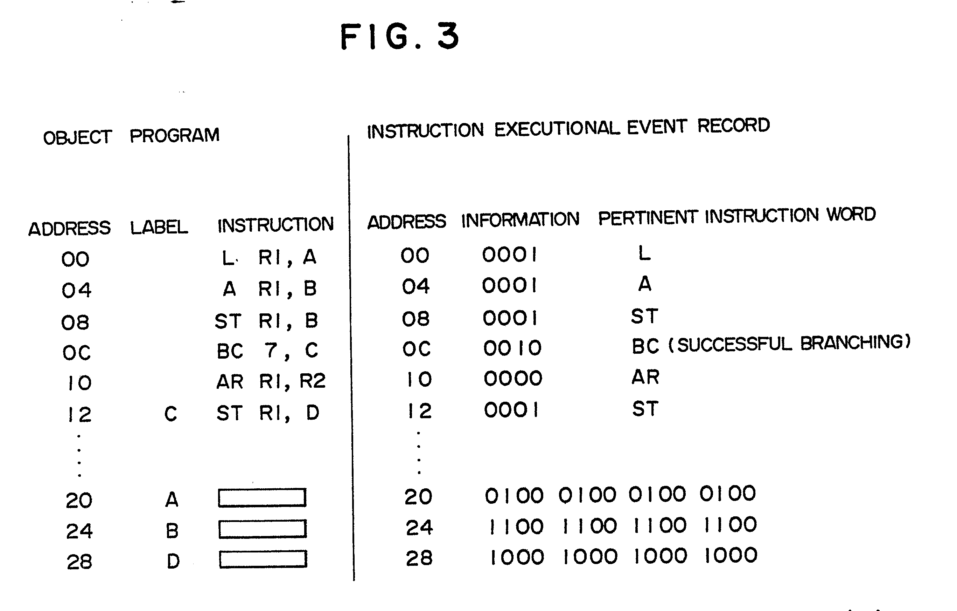

The instruction executional information is
recorded in the memory 2200 at locations corresponding
to addresses of instructions and their operands. In the
instruction monitor, a new set of information is recorded
on a logical-sum basis with information which is already
recorded. An example of the instruction executional
event record is shown in Fig. 3, in which a set of
instruction executional information (including information
on successful or unsuccessful branching of a branch
instruction) is recorded at a location in the memory 2200
corresponding to the first address of that instruction
word, and main storage reference/change information is
recorded for each byte at a location in the memory 2200
corresponding to the address of that byte. For example,
a set of instruction executional information for a 4-byte
instruction word beginning at address 0 is recorded at
the location in the memory 2200 corresponding to address
0, with the memory contents at the locations corresponding
to addresses 1, 2 and 3 being left unchanged. In another
example, a 4-byte operand at address 20 is subjected
to address reference/change in 4-byte units, but its
reference/change information is recorded for each byte
at corresponding location in the memory 2200.

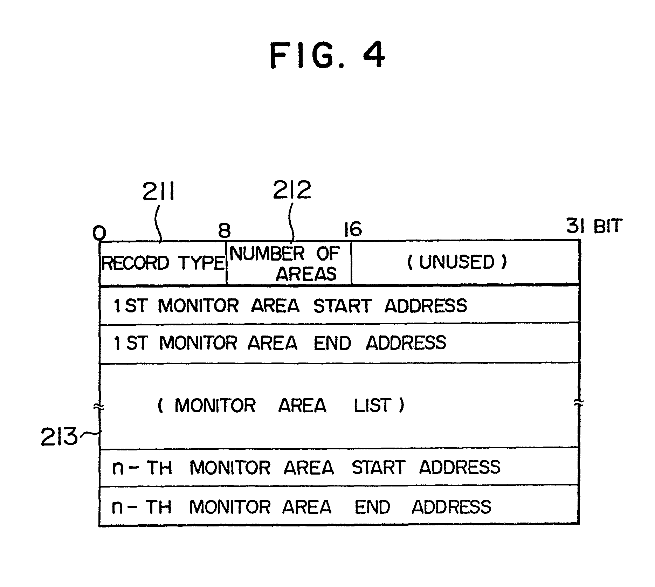

The recording operation for instruction executional events is controlled by the instruction event recording controller 2100. The controller 2100 controls the overall instruction monitor 2000 in accordance with information stored as instruction event recording control words (will be termed RCW hereinafter). The RCW has entries as shown in Fig. 4, and they can be set arbitrarily through the execution of the special commands (will be termed "instruction monitor control commands" hereinafter) by the central processor 1000.

Record type 211 in Fig. 4 is an 8-bit field for specifying events to be recorded by the instruction monitor, and bit assignment is as shown in Table 1.

0202628

Table 1  Record type

| Bit position | Value | Specification |
|---|---|---|
| 0 | 0 | Instruction execution is not recorded. |
|   | 1 | Instruction execution is recorded. |
| 1 | 0 | Main storage reference/change is not recorded. |
|   | 1 | Main storage reference/change is recorded. |
| 2 | 0 | Operation does not take place in address non-translation mode. |
|   | 1 | Operation takes place in address non-translation mode. |
| 3 | 0 | Operation does not take place in address translation mode. |
|   | 1 | Operation takes place in address translation mode. |
| 4 | 0 | Operation does not take place in VMCP run. |
|   | 1 | Operation takes place in VMCP run. |
| 5 | 0 | Operation does not take place in VM run. |
|   | 1 | Operation takes place in VM run. |
| 6 | 0 | Unused |
| 7 | 0 | Unused |

With bit 0 being "1", execution of an instruction or successful or unsuccessful branching of a branch instruction is recorded, and with bit 1 being "1", main storage reference/change is recorded.  These two bits can be "1" at the same time.  With bit 2 being "1", instruction executional events are recorded only when the central processor 1000 is in address non-translation mode, while with bit 3 being "1", instruction executional events are recorded only when the processor is in address translation mode. In case a virtual machine system operates in the central processor with bit 4 being "1", instruction executional events of VMCP, which is the control program of the virtual machine system, are collected, while with bit 5 being "1", instruction executional events of OS operating in the virtual machine system are recorded. If more than one bit among bit 2 through bit 5 is "1", a logical product of specified conditions becomes the recording condition.

Number of areas 212 in Fig. 4 is an 8-bit field for specifying the number of areas under event recording (i.e., monitor areas). The field takes values 1 through 255. Each of monitor areas is represented by a pair of data in monitor area list 213, and the pair of data indicate the starting and ending addresses of the monitor area. The memory 2200 is logically partitioned in number specified as the number of areas 212 (each memory section is called an area), and each area corresponds to a monitor area specified in the monitor area list 213.

Next, the instruction monitor control commands issued by the central processor for controlling the instruction monitor will be described. There are seven kinds of commands as follows.

**0202628**

i) Start Event Recording

This command is used to commence the instruction executional event recording operation in accordance with the RCW contents which have been set.

ii) Halt Event Recording

This command is used to halt the instruction executional event recording operation.

iii) Load RCW

This command is used to load the control information specified in the operand of this command into RCW. The command checks as to whether the capacity of the memory 2200 is sufficient to record instruction executional information for all specified monitor areas, and if it is found negative the command sets "1" in the condition code for the result of execution of this command.

iv) Read Memory

This command is used to read out instruction executional information recorded in the memory 2200 into the main storage at the location specified by the operand.

v) Clear Memory

Execution of this command halts the instruction executional event recording operation and clears the memory 2200 and the control registers in the event recording controller 2100.

vi) Load RCW & Start Event Recording

Execution of this command is followed by RCW loading and then commencement of event recording.

vii) Test

This command checks the connection of the instruction monitor, and if it is found disconnected the command sets "2" in the condition code for the result of execution of this command. If the monitor is found connected, the command writes the capacity of the memory 2200 and the like into the main storage.

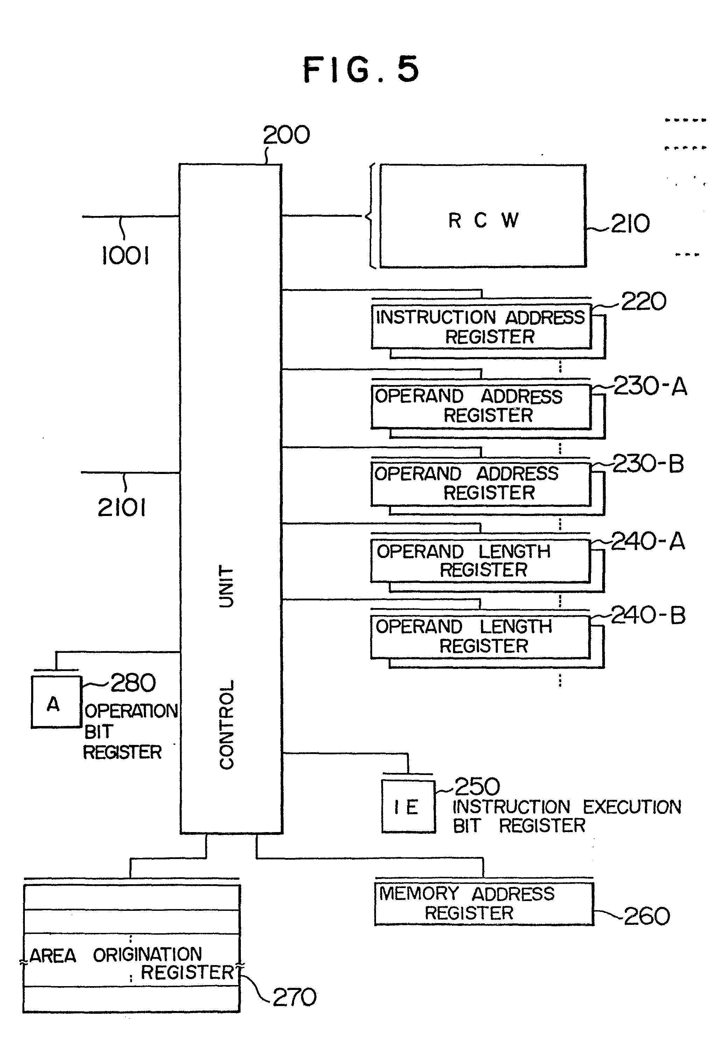

Fig. 5 shows in further detail the instruction event recording controller 2100. The controller 2100 incorporates a microprogram-based control unit 200 for controlling the recording operation of instruction executional events, an RCW 210, an instruction address register 220 for holding the instruction address, an operand address register pair 230-A and 230-B for holding the operand addresses of the instruction, an operand length register pair 240-A and 240-B for holding the lengths of the operands, an instruction execution bit register 250 for recording the completion of execution of an instruction, an operation bit register 280 indicating the consistence of the event recording condition indicated by the bits 2 through 5 of the record type 211 with the operational mode of the central processor, a memory address register 260 indicating the address of the memory 2200, and an area origination register 270 indicating the originating addresses of the partitioned areas in the memory 2200. Among the registers, the instruction address register 220, operand register pair 230-A,B and operand length register pair 240-A,B are provided in the same number as the number of instruction types under pipeline preceding control. The area origination register 270 is set to a value calculated using the values of the monitor area list 213 when the RCW load command is executed.

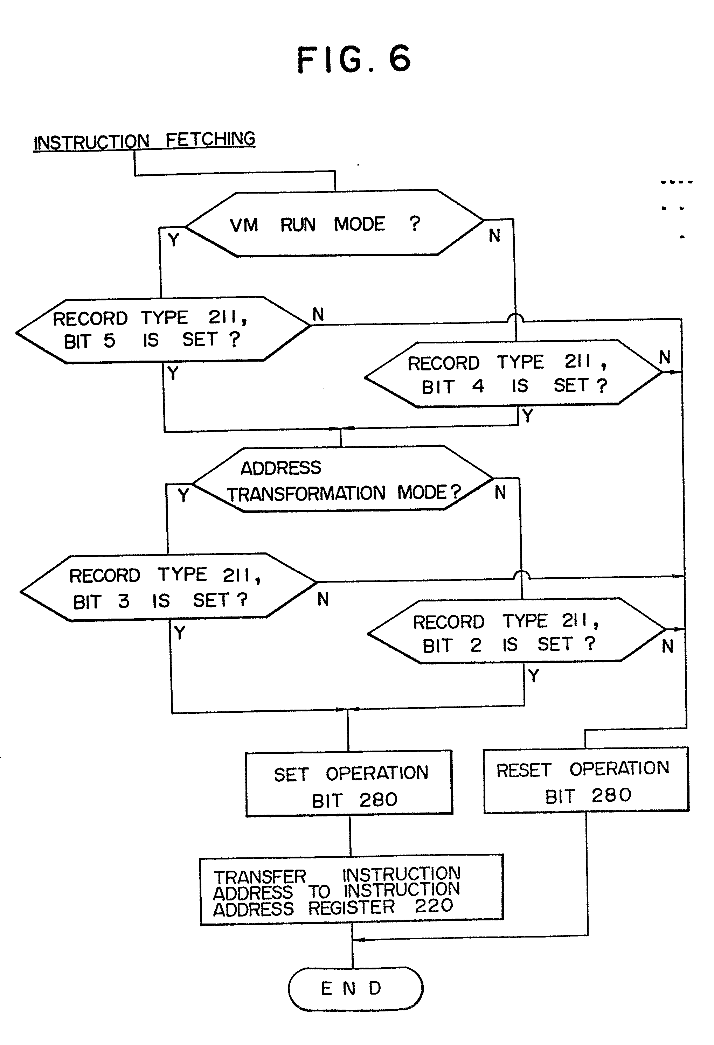

The operation of the instruction event recording controller 2100 will be described. The instruction executional event recording operation takes place in synchronism with the following three pipeline stages of the central processor as shown in the flowcharts of Figs. 6, 7 and 8, respectively.

     (1)   Instruction fetching

     (2)   Operand fetching

     (3)   Instruction execution


I.  Instruction fetching (Fig. 6)

The instruction control unit 1100 calculates the address of the instruction word, and it is read out of the main storage. The instruction address and the central processor operating mode are indicated through the signal line 1101, interface unit 1300 and signal line 1001 to the event recording controller 2100, which then implements the following operations basing on the operational mode of the central processor and the address of the instruction word.

(1)     The event recording controller tests whether the central processor operating mode is consistent with the event recording condition indicated on bits 2-5 of record type 211, and if they are found consistent it sets the operation bit 280 to "1" and proceeds to the following step (2). If they are not consistent, the recording controller sets the operation bit 280 to "0" and terminates the process.

(2)     The event recording controller stores the address of the instruction word in the address register 220.

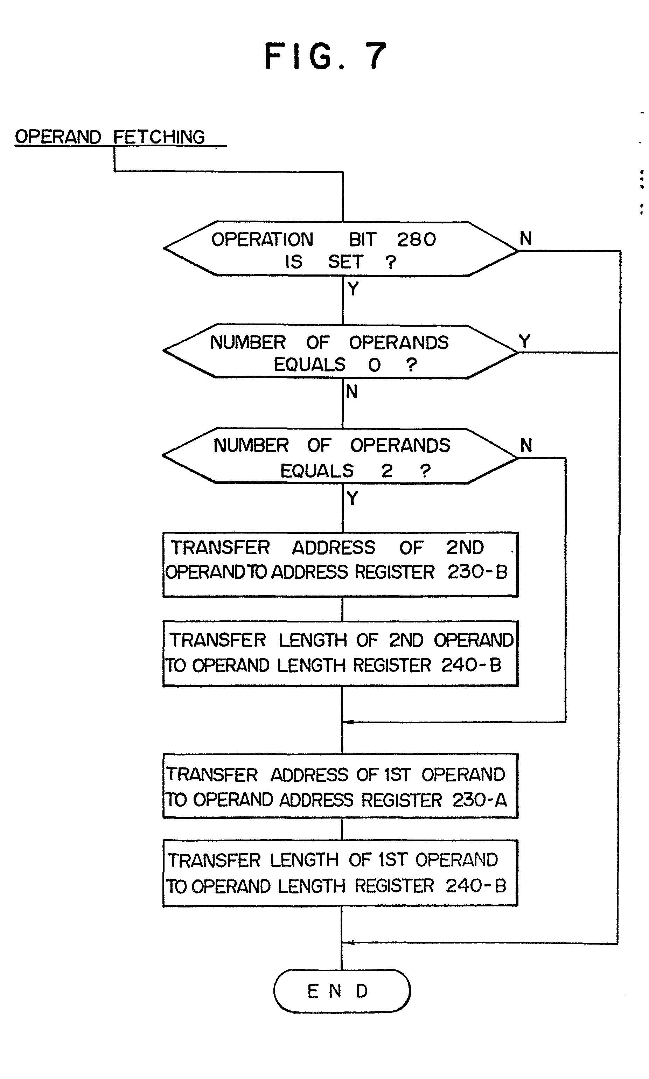

II.   Operand fetching (Fig. 7)

Upon calculation of the operand address and operand length by the instruction control unit 1100, they are indicated to the event recording controller 2100, in the same way as in instruction fetching, which then implements the following operations.

(1)     The event recording controller tests the state of the operation bit 280, and if it is found "1", the controller proceeds to the following step (2), otherwise it terminates the process.

(2)     The event recording controller stores the received operand address and operand length in the operand address register 230-A and operand length register 240-A, respectively. In case the instruction includes two operands, the first operand information is stored in the registers 230-A and 240-A, and the second operand information is stored in the registers 230-B and 240-B.

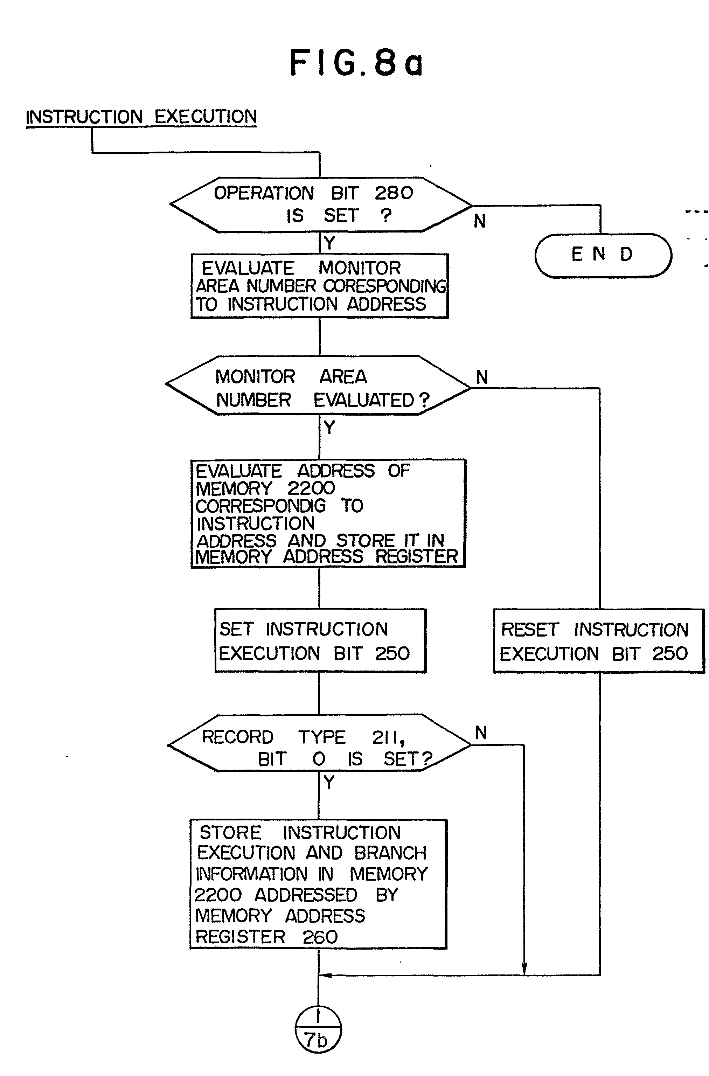

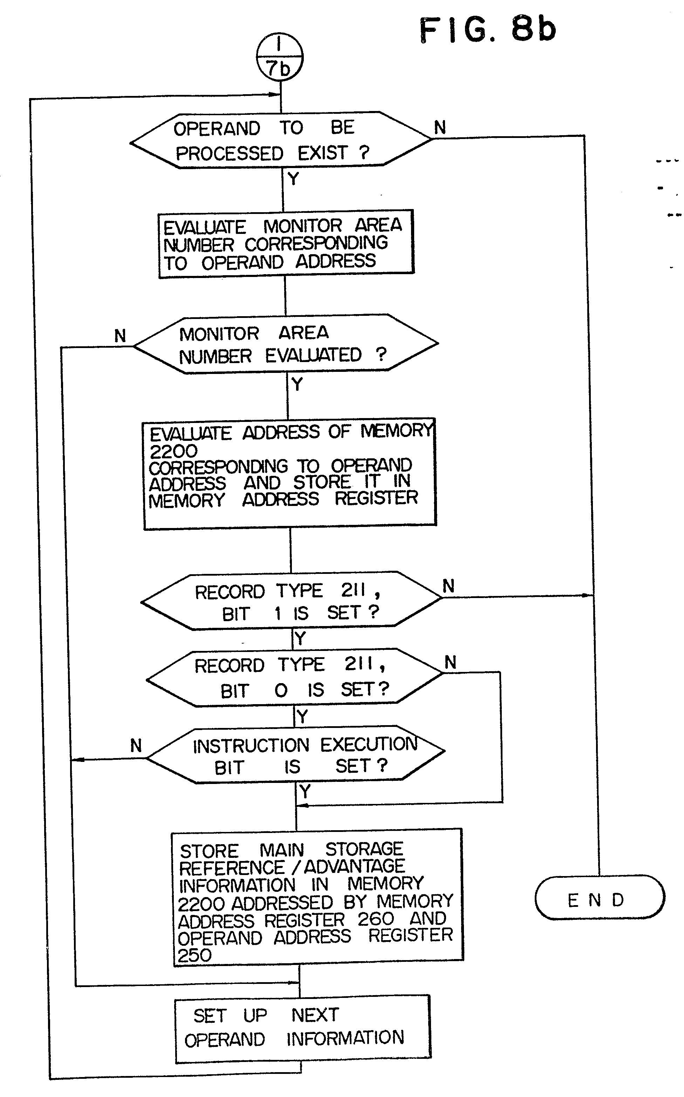

III.  Instruction execution (Fig. 8)

Upon execution by the operation control unit 1200 of the instruction which has been fetched by the instruction control unit 1100, the instruction executional information (including information on successful or unsuccessful branching of a branch instruction) and the main storage reference/change information are indicated through the signal line 1201, interface unit 1300 and signal line 1001 to the event recording controller 2100.  Upon receiving the information, the event recording controller 2100 implements the following processings.

(1)     The controller tests the state of the operation bit 280, and proceeds to the following processings (2)-(5) if it is "1", otherwise it terminates the process.

(2)     The controller tests whether the instruction address held in the instruction address register 220 is located within the monitor area indicated by the monitor area list 213 in the RCW 210, and if it is true, the controller calculates the address of the memory 2200 corresponding to the tested address by making reference to the memory origination register 270, stores the result in the memory address register 260, and sets the instruction bit 250 to "1".

(3)     If bit 0 of record type 211 in the RCW 210 is "1", the controller stores the instruction executional information or branch instruction executional information in the memory 2200 addressed by the memory address register 260.

(4)     If the operand address held in the operand address register 230-A is located within the monitor area indicated by the monitor area list 213 in the RCW 210, the controller calculates the address of the memory 2200 corresponding to the operand address and stores the result in the memory address register 260.

(5)     If bits 0 and 1 of the record type 211 in the RCW 210 are both "1", the controller tests the instruction execution bit 250 and, if it is found "1", stores the main storage reference/change information in the memory 2200 addressed by the memory address register 260. In another case if bits 0 and 1 of the record type 211 are "0" and "1", respectively, the controller stores the main storage reference/change information in the memory 2200 addressed by the memory address register 260 regardless of the state of the instruction execution bit.

Information recorded as described above is transferred to the main storage by the memory read command and outputted on the printer or the like on request so that it is used to check whether the program test has been conducted in a sufficient range and also used for the debugging of the program.

Although in the foregoing embodiment the instruction monitor is controlled (for record starting, halting, etc.) by the command (i)-(vii) executed by the central processor, this control may alternatively be implemented externally (e.g., by manual operation) through the console, service processor and the like, or the system may be made operative in both control modes.

The specialty hardware arrangement of the above embodiment may be replaced with a software-based system using a fast-operating microprocessor for implementing the foregoing processings. The recording means (memory 2200 in the above embodiment) may be substituted by part of the main storage. The present invention is also applicable to a pseudo program such as an I/O channel program.

The embodiment described above has the following advantages in addition to the primary effectiveness of the present invention.

(1)     Recording of main storage reference/change events unveils memory areas accessed in program execution, and it is available for the enhancement of program debugging performance.

(2)     Definition of the program range to be monitored eliminates unnecessary information, and it further enhances the evaluation of test perfection and the efficiency of debugging. The range of program under monitor can be defined in more detail through the specification of the operating mode of the central processor.

(3)     Combinational use of a recording controller operative in response to the commands of the central processor and a recording controller operated externally allows separation of the monitor operation for application programs, which is implemented by the former, and the monitor operation for the OS, which is implemented by the latter.

The present invention enables collection and recording of instruction executional events including successful or unsuccessful branching of branch instructions as well as execution of instructions concurrently with the execution of these instructions without the need of modification for the program under test, whereby information necessary and sufficient for the evaluation of perfection of the program test can readily be obtained.

CLAIMS:

1.     An instruction monitor used for a stored-program data processor which sequentially fetches instructions from a storage and executes the instructions comprising:

record memory means (2200) provided in correspondence to the address space of at least part of said storage; and

recording control means (2100) for storing instruction executional information including execution of an instruction and successful or unsuccessful branching of a branch instruction into a pertinent address of said record memory means in response to each instruction execution.

2.     An instruction monitor according to claim 1, wherein said recording control means (2100) operates to store information indicative of execution of an instruction or successful or unsuccessful branching of a branch instruction into said record memory means (2200) at a location corresponding to the address of said instruction, and stores information indicative of reference/change of said storage into said record memory means (2200) at a location corresponding to the address of said storage at which the storage reference/change event has occurred.

3.     An instruction monitor according to claim 1 or 2, wherein said recording control means (2100) comprises rewritable control information holding means for holding control information which specifies details of operation of said recording control means.

4.      An instruction monitor according to claim 3, wherein said control information includes information which specifies at least one range of area in said storage to be subjected to collection of instruction executional information.

5.      An instruction monitor according to claim 1, 2, 3 or 4, wherein said recording control means (2100) is controllable by a signal from said data processor or by a signal from outside.

6.      An instruction monitor according to claim 1, wherein said monitor is operative to store said instruction executional information into said record memory means (2200) concurrently with instruction execution.

# FIG. 1

CONTROL PROCESSOR — 1000

INSTRUCTION CONTROL UNIT — 1100, 1101

OPERATION CONTROL UNIT — 1200

INTERFACE — 1300

1201

1001

INSTRUCTION MONITOR — 2000

EVENT RECORD CONTROLLER — 2100, 2101

FAST-OPERATING MEMORY — 2200

# FIG. 2

$2^3$ $2^2$ $2^1$ $2^0$

MAIN STORAGE REFERENCE/CHANGE      EXECUTION COMPLETION / SUCCESSFUL BRANCHING

$2^3$ $2^2$

| | | |
|---|---|---|
| 0 | 0 | MAIN STORAGE REFERENCE/CHANGE |
| 0 | 1 | MAIN REFERENCE |
| 1 | 0 | MAIN CHANGE |
| 1 | 1 | MAIN REFERENCE & CHANGE |

$2^1$ $2^0$

| | | |
|---|---|---|
| 0 | 0 | INSTRUCTION NOT EXECUTED |
| 0 | 1 | { INSTRUCTION EXECUTED (EXCEPT BRANCH INSTRUCTION) / UNSUCCESSFUL BRANCHING |
| 1 | 0 | SUCCESSFUL BRANCHING |
| 1 | 1 | SUCCESSFUL / UNSUCCESSFUL BRANCHING |

2/9

0202628

# FIG. 3

## OBJECT PROGRAM

| ADDRESS | LABEL | INSTRUCTION |
|---------|-------|-------------|
| OO | | L RI, A |
| O4 | | A RI, B |
| O8 | | ST RI, B |
| OC | | BC 7, C |
| IO | | AR RI, R2 |
| I2 | C | ST RI, D |
| ⋮ | | |
| 20 | A | ☐ |
| 24 | B | ☐ |
| 28 | D | ☐ |

## INSTRUCTION EXECUTIONAL EVENT RECORD

| ADDRESS | INFORMATION | PERTINENT INSTRUCTION WORD |
|---------|-------------|----------------------------|
| OO | OOOI | L |
| O4 | OOOI | A |
| O8 | OOOI | ST |
| OC | OOIO | BC (SUCCESSFUL BRANCHING) |
| IO | OOOO | AR |
| I2 | OOOI | ST |
| ⋮ | | |
| 20 | OIOO OIOO OIOO OIOO | |
| 24 | IIOO IIOO IIOO IIOO | |
| 28 | IOOO IOOO IOOO IOOO | |

# FIG. 4

211    212

0          8    16                    31 BIT

| RECORD TYPE | NUMBER OF AREAS | ( UNUSED ) |
|---|---|---|
| 1ST MONITOR AREA START ADDRESS | | |
| 1ST MONITOR AREA END ADDRESS | | |
| ( MONITOR AREA LIST ) | | |
| n-TH MONITOR AREA START ADDRESS | | |
| n-TH MONITOR AREA END ADDRESS | | |

213

0202628

# FIG. 5

# FIG. 6

INSTRUCTION FETCHING

7/9

0202628

# FIG. 7

OPERAND FETCHING

```
        ⟨ OPERATION   BIT  280 ⟩─N─┐
        ⟨      IS   SET  ?      ⟩   │
                │Y                  │
        ⟨ NUMBER  OF  OPERANDS ⟩─Y──┤
        ⟨     EQUALS  O  ?     ⟩    │
                │N                  │
        ⟨ NUMBER  OF  OPERANDS ⟩─N─┐│
        ⟨     EQUALS   2  ?    ⟩   ││
                │Y                 ││
```

| TRANSFER   ADDRESS   OF   2ND OPERAND TO ADDRESS REGISTER 230-B |

| TRANSFER  LENGTH OF 2ND OPERAND TO OPERAND LENGTH REGISTER 240-B |

| TRANSFER  ADDRESS OF 1ST OPERAND TO OPERAND ADDRESS REGISTER 230-A |

| TRANSFER LENGTH OF 1ST OPERAND TO OPERAND LENGTH REGISTER 240-B |

( E N D )

# FIG. 8a

INSTRUCTION EXECUTION

OPERATION BIT 280 IS SET ?

N → END

Y

EVALUATE MONITOR AREA NUMBER CORESPONDING TO INSTRUCTION ADDRESS

MONITOR AREA NUMBER EVALUATED ?

N →

Y

EVALUATE ADDRESS OF MEMORY 2200 CORRESPONDIG TO INSTRUCTION ADDRESS AND STORE IT IN MEMORY ADDRESS REGISTER

SET INSTRUCTION EXECUTION BIT 250

RESET INSTRUCTION EXECUTION BIT 250

RECORD TYPE 211, BIT 0 IS SET?

N →

Y

STORE INSTRUCTION EXECUTION AND BRANCH INFORMATION IN MEMORY 2200 ADDRESSED BY MEMORY ADDRESS REGISTER 260

7b

# FIG. 8b